# DEMANDE DE BREVET EUROPEEN

(11) **EP 1 787 862 A1**
(43) Date de publication de la demande: **23.05.2007**
(21) Numéro de dépôt: 06301142.3
(22) Date de dépôt: 09.11.2006
(51) Int. Cl.: B60R 1/06

(54) **Rétroviseur comprenant un boîtier pourvu d'ondulation**

(30) Priorité: 18.11.2005 FR 0511712
(71) Demandeur: Peugeot Citroen Automobiles, 78140 Velizy-Villacoublay (FR)
(72) Inventeur: Vergne, Sandrine, 92290 Chatenay-Malabry (FR); Picard, Christophe, 92370 Chaville (FR); Pachebat, Marc, 92380 Garches (FR); Zelmar, Philippe, 75018 PARIS (FR)

(57) **Abrégé**

L'invention concerne un rétroviseur destiné à un véhicule automobile, ce rétroviseur comprenant un boîtier ayant une paroi bombée pourvue d'ondulations.

Le boîtier (9) comprend une paroi bombée (10) se terminant par un bord (14) entourant le miroir, cette paroi bombée (10) se prolongeant en un pied de fixation (11) du boîtier. La paroi bombée (10) comprend au moins une ondulation (12a-12d) orientée de façon divergente pour dévier un flux d'air incident en l'éloignant du véhicule sur lequel est monté le rétroviseur.

L'invention s'applique à la réduction du bruit aérodynamique résultant, dans l'habitacle, de la présence du rétroviseur, et de l'amélioration du torseur aérodynamique du rétroviseur.

## Description

L'invention concerne un rétroviseur pour véhicule automobile, comprenant un boîtier portant un miroir, ce boîtier comprenant une paroi bombée se terminant par un bord entourant le miroir, cette paroi bombée se prolongeant en un pied de fixation du boîtier.

L'invention concerne la réduction de bruit dans l'habitacle d'un véhicule automobile qui roule. Le bruit perçu depuis l'intérieur de l'habitacle d'un véhicule résulte notamment de trois sources, qui sont le moteur du véhicule, le roulement du véhicule, c'est-à-dire le contact des pneus avec la chaussée et l'écoulement d'air autour du véhicule, c'est-à-dire le bruit d'origine aérodynamique ou aéroacoustique.

L'évolution de la conception automobile a permis de diminuer significativement le bruit produit par les deux premières sources, de sorte que les sources de bruit aérodynamique sont devenues importantes, comme en particulier celles générées par des accessoires externes du véhicule, tels que les essuie-glace, les rétroviseurs, ou autres, et qui deviennent prédominantes typiquement à partir d'une vitesse de 100 km/h.

Le but de l'invention est de remédier à ces inconvénients en proposant un rétroviseur générant un bruit aérodynamique diminué.

A cet effet, l'invention a pour objet un rétroviseur pour véhicule automobile, comprenant un boîtier portant un miroir, ce boîtier comprenant une paroi bombée se terminant par un bord entourant le miroir, cette paroi bombée se prolongeant en un pied de fixation du boîtier, caractérisé en ce que cette paroi bombée comprend au moins une ondulation orientée de façon divergente afin de dévier un écoulement d'air entourant le rétroviseur pour l'écarter du véhicule.

Ces ondulations écartent du véhicule le sillage de l'écoulement d'air entourant le rétroviseur, pour éviter que ce sillage n'impacte une paroi latérale du véhicule, comme par exemple une vitre. Du fait qu'il est dévié, ce sillage qui comprend généralement des zones de turbulence ne risque pas de faire vibrer la vitre latérale, ce qui contribue à réduire significativement le niveau de bruit dans l'habitacle.

Ces modifications de l'écoulement améliorent également le torseur aérodynamique en réduisant le coefficient de traînée aérodynamique.

L'invention concerne également un rétroviseur comprenant plusieurs ondulations s'étendant parallèlement les unes aux autres le long de la paroi bombée.

L'invention concerne également un rétroviseur comprenant plusieurs ondulations s'étendant le long de la paroi bombée en formant entre elles un angle.

L'invention concerne également un rétroviseur comprenant des ondulations s'étendant dans une moitié supérieure de la paroi du boîtier.

L'invention concerne également un rétroviseur comprenant des ondulations formant des sillons et/ou des bossages.

L'invention concerne également un rétroviseur comprenant au moins une ondulation inscrite dans un plan.

L'invention concerne également un rétroviseur comprenant au moins une ondulation de forme curviligne.

L'invention concerne également un rétroviseur dans lequel au moins une ondulation a une section ayant une hauteur et/ou une largeur qui varie le long de cette ondulation.

L'invention sera maintenant décrite plus en détail, et en référence aux dessins annexés qui en illustrent une forme de réalisation à titre d'exemple non limitatif.
La figure 1 est une vue en coupe horizontale illustrant le sillage généré par un rétroviseur de l'Etat de la technique ;
La figure 2 est une vue de dessus montrant le sillage généré par un rétroviseur de l'Etat de la technique ;
La figure 3 est une vue de côté le sillage généré par un rétroviseur de l'Etat de la technique ;
La figure 4 est une autre vue en coupe horizontale montrant le sillage généré par un rétroviseur de l'Etat de la technique ;
La figure 5 est une vue en coupe horizontale montrant le sillage généré par un rétroviseur selon l'invention ;
La figure 6 est une vue de dessus d'un premier rétroviseur selon l'invention ;
La figure 7 est une vue de face du boîtier du rétroviseur de la figure 6 ;
La figure 8 est une vue de dessus d'un second rétroviseur selon l'invention ;
La figure 9 est une vue de face du rétroviseur de la figure 8 ;
La figure 10 est une vue en coupe d'un rétroviseur selon l'invention ;
La figure 11 est une vue de dessus représentant symboliquement un rétroviseur selon l'invention ;
La figure 12 est une vue de dessus représentant symboliquement un autre rétroviseur selon l'invention ;
La figure 13 est une vue de dessus représentant symboliquement un autre rétroviseur selon l'invention.

L'idée à la base de l'invention réside dans le constat selon lequel le bruit généré par un rétroviseur provient des turbulences dans le sillage du rétroviseur et des fluctuations de pressions sur les vitrages dues à l'écoulement, qui excitent les vitres latérales du véhicule en les mettant en vibration, ce qui génère un niveau de bruit élevé dans l'habitacle.

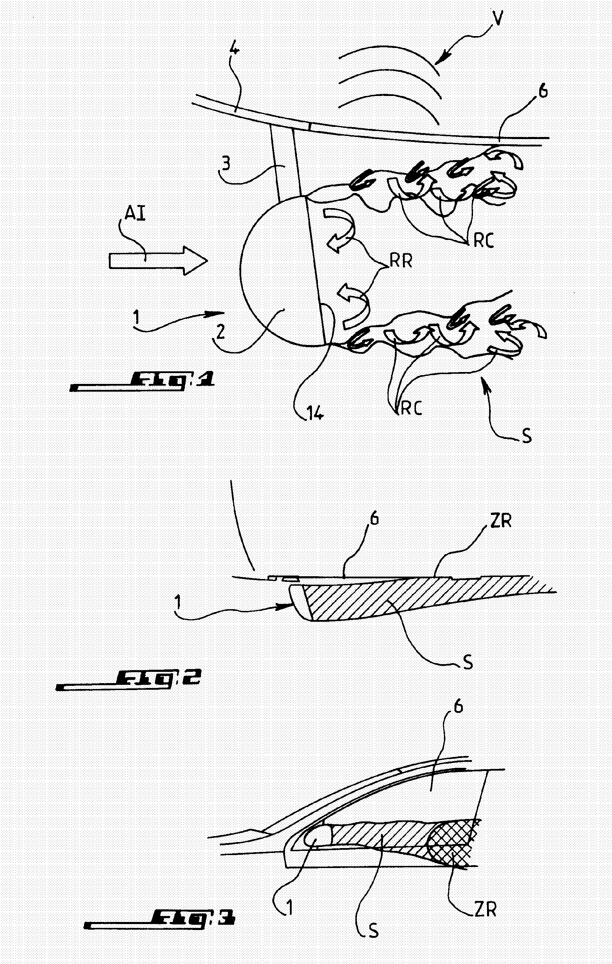

Dans la figure 1, un rétroviseur 1 de l'Etat de la technique représenté en vue de dessus comprend un boîtier bombé 2 se prolongeant en un pied de fixation 3 par lequel il est solidarisé à une partie externe 4 d'un véhicule. Lorsque le véhicule roule, l'air AI incident sur une partie avant du boîtier 2 donne lieu à un sillage S en aval de ce boîtier. Ce sillage comprend une région périphérique turbulente dite de cisaillement, repérée par RC, et une région centrale dite de recirculation, repérée par RR, et située à proximité du rétroviseur.

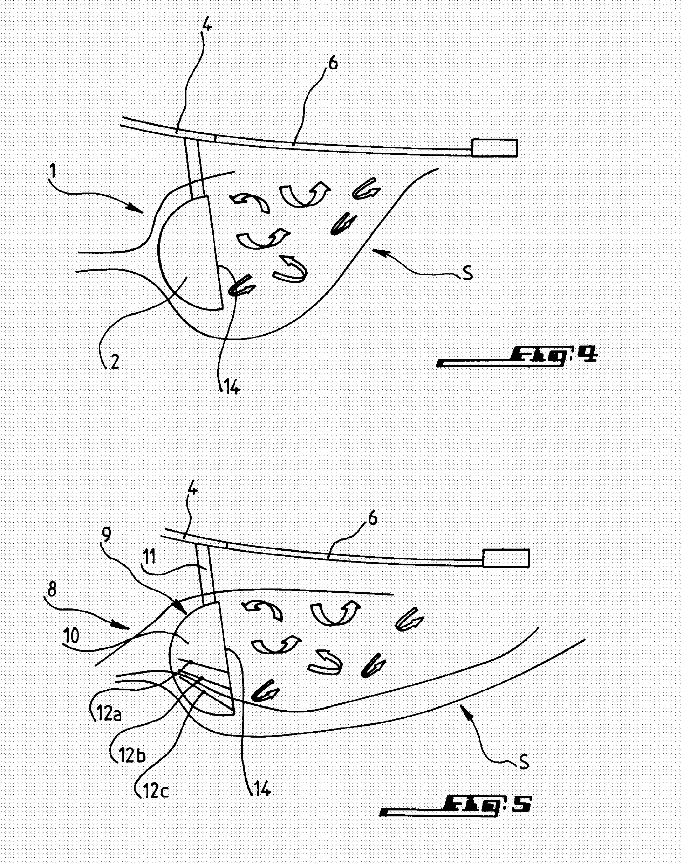

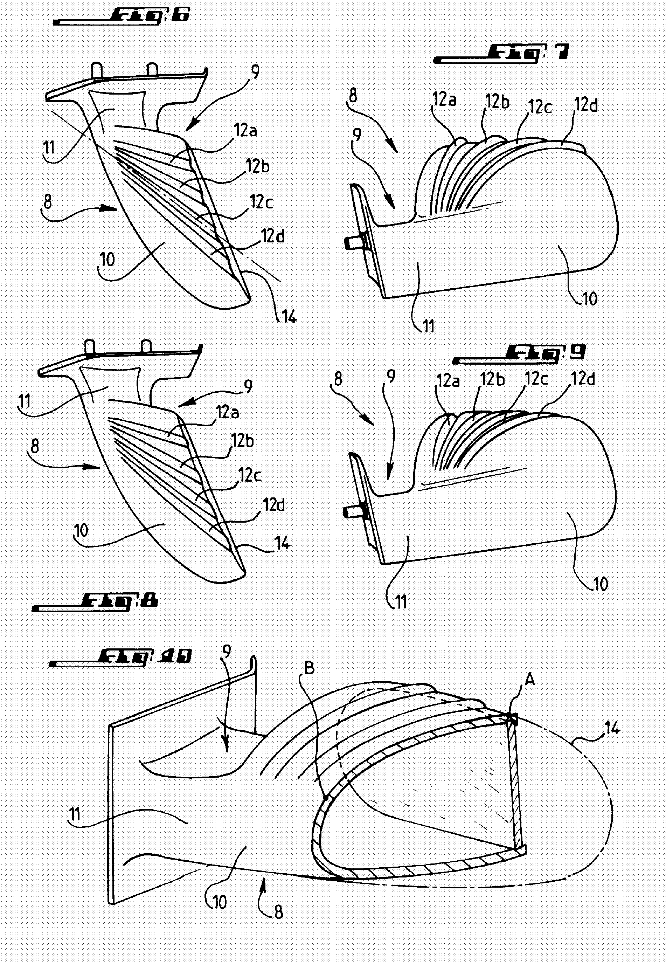

Comme visible dans les figures 2 et 3, le sillage S qui est en aval du rétroviseur 1, part du boîtier du rétroviseur qui est espacé du côté du véhicule 4, et s'oriente spontanément de façon oblique pour se recoller contre une paroi latérale du véhicule.

Ce sillage impacte le côté du véhicule dans une zone de recollement ZR qui débute au niveau de la vitre latérale la plus proche 6, qui est la vitre du conducteur dans l'exemple des figures 1 à 3. Cette zone de recollement se prolonge au niveau de la vitre arrière contiguë, ce qui tend également à la faire vibrer.

Les fluctuations turbulentes et de pression dans les zones de cisaillements RC sont encore présentes dans la zone de recollement ZR et sont donc encore sources de bruit et de vibrations V des vitres latérales du véhicule. Ces vibrations V sont rayonnées par la ou les vitres latérales, et propagées dans l'habitacle jusqu'aux oreilles des occupants du véhicule.

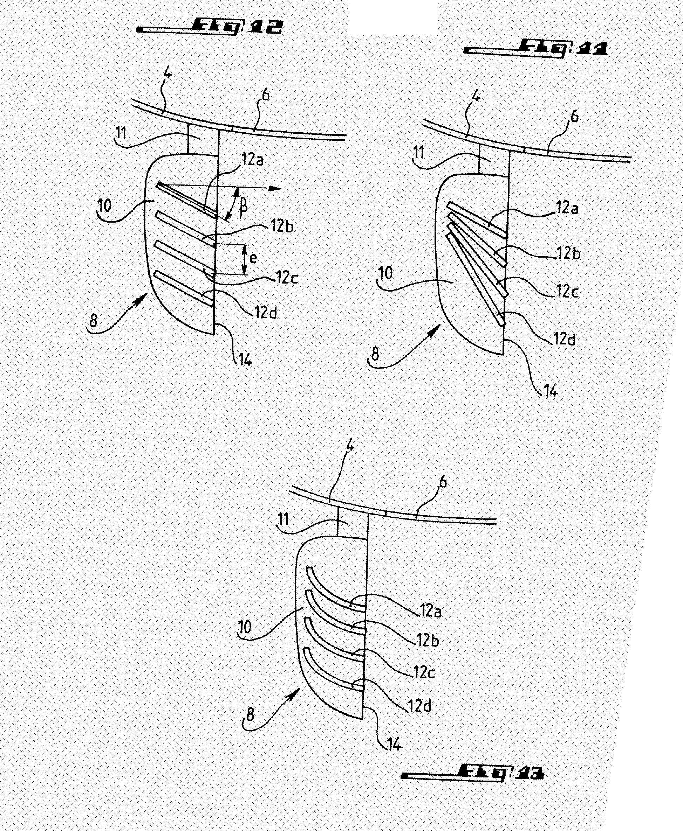

Dans l'exemple des figures 1 à 3, la zone de recollement ZR est située relativement en arrière de la vitre 6, mais la forme du rétroviseur, la présence d'un vent latéral, ou d'autres paramètres peuvent conduire à une zone de recollement très proche du rétroviseur, c'est-à-dire sensiblement au centre de la vitre 6, comme c'est le cas dans l'exemple de la figure 4, soit au voisinage des oreilles des passagers du véhicule.

Le rétroviseur selon l'invention, qui est représenté en figure 5 en étant repéré par 8, comprend un boîtier 9 incluant une paroi bombée 10 prolongée par un pied de fixation 11. Cette paroi bombée 10 comprend plusieurs ondulations 12a-12c qui sont orientées de façon divergentes de façon à écarter le sillage S en l'éloignant des vitres latérales.

Ces ondulations sont orientées de façon à former un angle par rapport à un plan longitudinal vertical du véhicule lorsque ce rétroviseur est monté sur le véhicule. L'écoulement d'air autour du boîtier 9 est ainsi dévié pour que le sillage S s'éloigne du côté du véhicule et fasse moins vibrer les vitres latérales situées en aval de ce rétroviseur.

Les sources de bruit sont donc éloignées du vitrage, en les repoussant vers l'extérieur du rétroviseur 2. L'impact du sillage sur le côté du véhicule est, quant à lui, soit inexistant, soit reporté plus en arrière du véhicule de sorte que l'excitation de la vitre latérale avant 6 est plus faible et donc le bruit dans l'habitacle diminué.

L'impact du sillage sur le côté du véhicule est ainsi soit inexistant, soit reporté très en arrière du véhicule de sorte que les turbulences sont plus éloignées du vitrage et génèrent ainsi un niveau de bruit dans l'habitacle qui est négligeable.

Les figures 6 et 7 montrent un rétroviseur selon l'invention comprenant quatre ondulations 12a-12d, situées sur la partie supérieure de la paroi bombée 10. Ces ondulations s'étendent chacune depuis une partie avant de la paroi bombée 10, jusqu'au bord 14 et assurent un guidage de l'écoulement d'air depuis son incidence sur le boîtier, jusqu'à ce qu'il dépasse ce boîtier.

Les ondulations peuvent se présenter sous différentes formes. Dans l'exemple des figures 6 et 7, il s'agit de bossages formant des reliefs courbes qui dépassent de la paroi bombée 10. Dans l'exemple des figures 8 et 9, ces ondulations se présentent sous forme de sillons courbes, ou canaux, formant des zones creuses dans la paroi bombée 10.

Les ondulations 12a-12d sont orientées de façon oblique divergente pour former avec un plan vertical longitudinal du véhicule un angle sortant β non nul. Ainsi, lorsque le rétroviseur est monté sur le véhicule, chaque ondulation s'éloigne de la paroi latérale du véhicule depuis l'avant vers l'arrière du boîtier du rétroviseur pour tendre à éloigner le sillage S de la paroi latérale du véhicule.

Ces ondulations peuvent former un léger angle les unes par rapport aux autres, comme dans l'exemple des figures 6 à 11, de sorte qu'elles définissent un motif de type éventail lorsque vues de dessus, pour favoriser le guidage du sillage S.

Mais ces ondulations peuvent également être parallèles les unes aux autres, comme dans l'exemple de la figure 12, tout en étant orientées selon une direction générale tendant à éloigner le sillage de la paroi latérale du véhicule.

Ces ondulations sont espacées les unes des autres d'un écart e qui peut être constant ou varier. Une même ondulation a une section pouvant être variable en largeur et en profondeur, en augmentant depuis le début de cette ondulation correspondant au point B de la figure 10 vers le point A de cette ondulation sur la figure 10. Cette section peut ainsi évoluer en largeur et en profondeur, sa forme générale pouvant être triangulaire ou en arc de cercle, ou courbe.

Afin d'augmenter l'efficacité de ces ondulations, elles peuvent être prévues avec une section qui rétrécit depuis le point B vers le point A de manière à produire un effet d'accélération de l'air passant dans cette ondulation.

Dans les exemples des figures 6 à 12, les ondulations 12a-12d suivent des courbes qui longent la paroi bombée 10, mais qui sont inscrites dans des plans correspondant par exemple à des plans de coupe possibles du boîtier, comme celui de la figure 10.

Mais ces ondulations peuvent également avoir des trajectoires qui sont courbes à la surface de la paroi bombée 10 lorsque vues de dessus, comme dans l'exemple de la figure 13.

Ces ondulations peuvent être présentes sur toute la partie supérieure de la paroi bombée du boîtier, ou seulement sur une partie de cette paroi bombée. Ces ondulations peuvent également s'étendre depuis une partie supérieure du bord 14 pour longer la paroi bombée, et pour rejoindre une partie inférieure de ce bord 14.

## Revendications

1. Rétroviseur (8) pour véhicule automobile, comprenant un boîtier (9) portant un miroir, ce boîtier (9) comprenant une paroi bombée (10) se terminant par un bord (14) entourant le miroir, cette paroi bombée (10) se prolongeant en un pied de fixation (11) du boîtier, **caractérisé en ce que** cette paroi bombée (10) comprend au moins une ondulation (12a-12d) orientée de façon divergente afin de dévier un écoulement d'air (S) entourant le rétroviseur pour l'écarter du véhicule.

2. Rétroviseur selon la revendication 1, comprenant plusieurs ondulations (12a-12d) s'étendant parallèlement les unes aux autres le long de la paroi bombée (10).

3. Rétroviseur selon la revendication 1, comprenant plusieurs ondulations (12a-12d) s'étendant le long de la paroi bombée (10) en formant entre elles un angle.

4. Rétroviseur selon l'une des revendications précédentes, comprenant des ondulations (12a-12d) s'étendant dans une moitié supérieure de la paroi bombée (10) .

5. Rétroviseur selon l'une des revendications précédentes, comprenant des ondulations (12a-12d) formant des sillons et/ou des bossages.

6. Rétroviseur selon l'une des revendications précédentes, comprenant au moins une ondulation (12a-12d) inscrite dans un plan.

7. Rétroviseur selon l'une des revendications précédentes, comprenant au moins une ondulation (12a-12d) de forme curviligne.

8. Rétroviseur selon l'une des revendications précédentes, dans lequel au moins une ondulation (12a-12d) a une section ayant une hauteur et/ou une largeur qui varie le long de cette ondulation.
